# EUROPÄISCHE PATENTSCHRIFT

(11) **EP 1 387 070 B1**
(45) Veröffentlichungstag und Bekanntmachung des Hinweises auf die Patenterteilung: **14.10.2009**
(21) Anmeldenummer: 03090205.0
(22) Anmeldetag: 08.07.2003
(51) Int. Cl.: F02D 41/02, F01N 3/20, F02D 41/06

(54) **Verfahren und Vorrichtung zum Betrieb einer Abgasnachbehandlungsanlage einer Verbrennungskraftmaschine**
Procedure and device for the operating of an exhaust purification intallation for an internal combustion engine
Procédé et appareil pour faire fonctionner un système de traitement de gaz d'échappement d'un moteur à combustion interne

(30) Priorität: 29.07.2002 DE 10235714
(43) Veröffentlichungstag der Anmeldung: 04.02.2004
(73) Patentinhaber: Volkswagen AG, 38436 Wolfsburg (DE)
(72) Erfinder: Pott, Ekkehard Dr., 38518 Gifhorn (DE); Zillmer, Michael Dr., 38173 Sickte (DE); Holz, Matthias, 38165 Lehre (DE)
(74) Vertreter: Schneider, Henry

(56) Entgegenhaltungen:
- DE-A1- 19 753 842
- DE-A1- 19 836 955
- DE-A1- 19 907 382

## Beschreibung

Die Erfindung betrifft ein Verfahren und eine Vorrichtung zum Betrieb einer Abgasnachbehandlungsanlage einer magerlauffähigen Verbrennungskraftmaschine unter Einbeziehung einer Motorsteuereinheit mit den in den Oberbegriffen der Ansprüche 1 und 14 genannten Merkmalen.

Ein gemeinsames Problem praktisch aller Katalysatoren stellt die starke Temperaturabhängigkeit der Katalysatoraktivität dar. Insbesondere benötigt jeder Katalysator eine gewisse Mindesttemperatur, unterhalb derer er nicht oder unzureichend arbeitet, das heißt unterhalb derer praktisch keine Konvertierung und/oder adsorbierende Speicherung von Schadstoffen stattfindet. Um nach einem Motorstart das Katalysatorsystem auf seine Arbeitstemperatur zu erwärmen, ist bekannt, in einer so genannten Warmlaufphase Maßnahmen zur Steigerung der Katalysatortemperatur durchzuführen. Beispielsweise wird bei Ottomotoren durch Verschlechterung eines Wirkungsgrades des Motors oder durch fetten Betrieb in Verbindung mit Sekundärluftzufuhr die Abgastemperatur und/oder ein chemischer Energiegehalt des Abgases erhöht und somit ein schnelles Überschreiten der Anspringtemperatur wenigstens eines Vorkatalysators erreicht. Nach Beendigung der Warmlaufphase werden üblicherweise keine temperatursteigernden Maßnahmen ergriffen.

Problematisch sind Schwachlastbetriebsphasen der Verbrennungskraftmaschine, insbesondere Leerlaufphasen, bei denen bei allen Brennverfahren, besonders aber bei Dieselmotoren oder direkteinspritzenden schichtladefähigen Ottomotoren, sehr niedrige Abgastemperaturen auftreten. Längeres Verharren in diesem Betriebsbereich führt zu einer Auskühlung des Katalysatorsystems. Die Abgastemperatur von Verbrennungsmotoren nimmt üblicherweise mit sinkender Last und (in geringerem Maße) mit sinkender Drehzahl ab. In länger andauerndem Schwachlastbetrieb (zum Beispiel Dauer-Leerlauf) wird somit insbesondere ein erster Katalysator zumindest teilweise so stark ausgekühlt, dass er seine günstigenfalls mögliche Konvertierungsleistung nicht mehr erreicht. Dies ist im Allgemeinen im Schwachlastbetrieb nicht besonders kritisch, da dieser üblicherweise mit niedrigen Abgasmassenströmen (→ hohe Verweilzeit im Katalysator) und niedrigen Rohemissionen, insbesondere HC-Rohemissionen, einhergeht. Kritisch ist jedoch eine dem Schwachlastbetrieb in zeitlicher Nähe folgende Betriebsphase mit höherer Last zu werten, da zumindest zu Beginn einer solchen Betriebsphase der Katalysator noch zumindest teilweise stark ausgekühlt sein kann und unter den verschärften Randbedingungen der höheren Abgasmassenströme (→ niedrigere Verweilzeiten im Katalysator) und der möglicherweise höheren HC-Rohemissionen mit deutlichen Schadstoffdurchbrüchen gerechnet werden muss.

Fahrzeuge mit magerlauffähigen oder direkteinspritzenden, schichtladefähigen Ottomotoren können im unteren Lastbereich in verschiedenen Betriebsarten betrieben werden. Dabei stellt der Schichtladebetrieb im Allgemeinen die verbrauchsgünstigste Betriebsart dar. Damit verbunden ist eine besonders niedrige Abgastemperatur, die in Schichtbetriebsphasen im untersten Lastbereich (n<0,4*n_{Nenn}; pₘₑ<0,2*p_{me,mx}) die Lightoff-Temperatur eines zumindest ersten, dem Motor nachgeschalteten Katalysators rasch unterschreiten kann. Der vorstehend beschriebene Effekt der Katalysatorauskühlung im leerlaufnahen Betriebsbereich trifft somit auf diese Motoren in besonderer Weise zu.

Aus dem Stand der Technik, zum Beispiel DE 197 29 087 C2, ist bekannt, bei Unterschreiten von Abgas- und/oder Katalysator-Temperaturschwellwerten abgas- und/oder katalysatortemperatursteigernde Maßnahmen zu ergreifen. Dabei können Temperaturschwellen vorgegeben werden, die im Bereich einer Anspringtemperatur eines Katalysators oder um bis zu 100 K höher liegen. Mit den bekannten Verfahren wird eine gewisse Emissionssicherheit erreicht, da durch geeignete Wahl der Temperaturschwellen ein starkes Auskühlen des oder der Katalysatoren verhindert werden kann. Durch eine reine Temperaturschwellenabfrage ist jedoch keine Aussage über das Auskühlverhalten eines Katalysators möglich, das heißt, eine eindeutige Aussage, welcher Volumenanteil eines Katalysators zu welchem Zeitpunkt eine kritische Temperaturschwelle unterschritten hat, ist nicht realisierbar. Die erforderliche Emissionssicherheit bei Unterschreiten der genannten Temperaturschwellen wird nach dem bekannten Stand der Technik durch ein kurzfristiges, unmittelbares Ergreifen von temperatursteigernden Maßnahmen gewährleistet, was bei direkteinspritzenden magerlauf- und schichtladefähigen Motoren in der Regel den Verbot des Schichtbetriebs zugunsten des "heißeren" Homogenbetriebs bedeutet. Damit verbunden ist ein Verbrauchsnachteil.

Der Erfindung liegt daher die Aufgabe zugrunde, ein Verfahren zur Verfügung zu stellen, das in allen Betriebsphasen der Verbrennungskraftmaschine eine ausreichende Abgas- und/oder Katalysatortemperatur sicherstellt, so dass der Kraftstoffverbrauch unter Gewährung der Emissionssicherheit gesenkt werden kann, in dem man das tatsächliche Maß der Auskühlung der Katalysatoren einer Abgasnachbehandlungsanlage besser erkennt, wodurch die Toleranzschwelle zum Start von temperaturerhöhenden Maßnahmen für das Abgasund/oder Katalysatorsystem erweitert werden kann. In Abgasnachbehandlungsanlagen mit wenigstens einem Vorkatalysator und wenigstens einem stromab angeordneten weiteren Katalysator sollte insbesondere eine übermäßige Auskühlung des Vorkatalysators verhindert werden.

Die Erfindung wird gemäß den Ansprüchen 1 und 17 realisiert. Vorteilhafte Ausgestaltungen des Verfahrens sind Gegenstand von Unteransprüchen. Das erfindungsgemäße Verfahren zum optimalen Betrieb einer Abgasnachbehandlungsanlage umfassend ein Katalysatorsystem mit mindestens einem ersten Katalysatorelement (Vorkatalysator) und vorzugsweise mindestens einem zweiten Katalysatorelement (Hauptkatalysator), die einer Verbrennungskraftmaschine nachgeschaltet sind und die mit einer elektronischen Motorsteuerung mit bevorzugt integrierter Steuereinheit verbunden sind, ist dadurch gekennzeichnet, dass hinter dem ersten Katalysatorelement der Energieaustrag (= energieaustragsbedingte Auskühlung) ermittelt wird. Dieser Energieaustrag wird im Unterschied zum zitierten Stand der Technik als Bezugsgröße für temperatursteigernde Maßnahmen für den Abgasstrom und/oder Katalysator eingesetzt. Beim Überschreiten vorgebbarer Schwellwerte für diesen Energieaustrag wird das Einleiten abgas- und/oder katalysatortemperatursteigernder Maßnahmen initiiert, deren Intensität von der Höhe des Energieaustrags abhängt und erfindungsgemäß mit der Höhe des Energieaustrags zunimmt.

In einer bevorzugten Ausführungsform der Erfindung werden wenigstens zwei Schwellwerte für den Energieaustrag aus dem ersten Katalysatorelement vorgegeben. Außerdem werden vorgebbare Temperaturminimalschwellwerte für das zweite Katalysatorelement in die Auswertung einbezogen. Erste temperatursteigernde Maßnahmen werden gemäß der Erfindung eingeleitet, wenn ein erster vorgebbarer Schwellwert für den Energieaustrag aus dem Vorkatalysator überschritten ist, vorzugsweise wenn gleichzeitig der Schwelltemperaturminimalwert für das zweite Katalysatorelement unterschritten ist. Die temperatursteigernden Maßnahmen werden zurückgenommen, wenn der Energieaustragswert einen ebenfalls vorgebbaren Minimalwert unterschreitet.

Überschreitet der Energieaustrag nach dem Vorkatalysator den zweiten Energieaustrags-Schwellwert, wird ebenfalls der Schwelltemperaturminimalwert für das zweite Katalysatorelement festgestellt (abgeglichen) und es werden, falls dieser Wert unterschritten wird, temperatursteigernde Maßnahmen eingeleitet, deren Intensität normalerweise höher sein wird als im ersten Fall. Die Maßnahmen werden zurückgenommen, wenn der Energieaustragswert einen vorgebbaren zweiten Minimalwert erreicht, der in der Regel unterhalb des ersten Minimalwertes liegt. Im Idealfall liegen diese beiden Minimalgrenzwerte für den Energieaustrag bei Null.

Das erfindungsgemäße Verfahren ist dadurch gekennzeichnet, dass zur Ermittlung des Energieaustrags aus dem ersten Katalysatorelement zuerst der Wärmestrom ermittelt wird, welcher das Produkt aus dem Abgasmassenstrom, der spezifischen Wärmekapazität und der Temperaturdifferenz zwischen einer vorgebbaren Abgastemperaturschwelle (Anspringtemperatur des Katalysators in Abhängigkeit von seiner Alterung) und der durch Messung oder Modell ermittelten Abgastemperatur vor dem Katalysatorsystem darstellt. Der Wärmestrom wird kumuliert und ergibt den Energieaustrag aus dem ersten Katalysatorelement.

Das Verfahren hat den großen Vorteil, dass die temperatursteigernden Maßnahmen nicht unmittelbar oder um eine bestimmte Verzögerungszeit nach Unterschreiten einer Temperaturschwelle ergriffen werden, sondern bedarfsgerecht abhängig von der tatsächlichen energieaustragsbedingten Auskühlung erst später eingeleitet werden können, wodurch Toleranzen des Systems besser ausgenutzt werden können.

Das erfindungsgemäße Verfahren wird vorzugsweise so gesteuert, dass die erfindungsgemäße Funktion einsetzt, wenn die dem Fachmann bekannte "Katheizfunktion" in der Motorstartphase beendet ist. Diese "Katheizfunktion" wird fachgemäß über eine vorgebbare Temperaturschwelle geregelt, um ein erstmaliges schnelles Aufheizen der Abgasanlage zu erreichen. Gemäß dem vorliegenden Verfahren werden die erfindungsgemäßen Maßnahmen vorzugsweise erst nach Abschluss der an sich bekannten Katalysatorbeheizung, die in der Regel in den ersten 2...120 Sekunden nach Motorstart ergriffen wird, da sie die bekannte "Katheizfunktion" nicht ersetzen sollen. Das Verfahren wird dabei so gesteuert, dass erst nach Abschluss des "Katheizungsverfahrens" in der Anspringphase nach Motorstart die Ermittlung des Energieaustrags durchgeführt wird.

Alternativ kann jedoch gemäß der Erfindung das Verfahren auch so gesteuert werden, dass bereits als "Katheizfunktion" in der Motorstartphase nicht ausschließlich die Temperatur als Grenzwert fungiert, sondern eine vorgebbare Schwelle für eine Mindest-Energiemenge für die Abgasnachbehandlungsanlage als Richtwert für einzuleitende Maßnahmen festgelegt wird. Diese Mindest-Energiemenge wird aus dem Abgasmassenstrom mal spezifische Wärmekapazität mal [Abgastemperatur vor Vorkatalysator minus Umgebungstemperatur], kumuliert ab Motorstart ermittelt. Nach Überschreiten eines in die Abgasanlage vorgebbaren Schwellwertes für diese Mindest-Energiemenge werden temperatursteigernde Maßnahmen eingeleitet.

Um die Aktivität der Abgasanlage während des Betriebs dauerhaft aufrecht zu erhalten, ist in einer bevorzugten Ausführungsvariante der Erfindung die Steuereinheit so ausgerichtet, dass sie ausschließlich für im Leerlauf arbeitende Verbrennungskraftmaschinen beim Überschreiten des/der Schwellwerte für die Mindest-Energiemenge vor der Abgasnachbehandlungsanlage und/oder für den Energieaustrag aus dem Vorkatalysator temperatursteigernde Maßnahmen regelt, so dass ein Ausgehen insbesondere des ersten Katalysatorelements verhindert wird.

Als temperatursteigernde Maßnahmen finden vorzugsweise motorische Maßnahmen Anwendung, die entweder zu einer Steigerung der Abgastemperatur und/oder zu einer Erhöhung eines Schadstoffanteils des Abgases führen. Gemäß der zweiten Alternative bewirkt dann eine bei der oxidativen Schadstoffkonvertierung am Katalysator frei werdende Reaktionswärme die gewünschte Katalysatorerwärmung.

Die in Frage kommenden temperatursteigernden Maßnahmen hängen von der Art der Verbrennungskraftmaschine ab. Im Falle fremdgezündeter Verbrennungskraftmaschinen (Ottomotoren) kann die temperatursteigernde Maßnahme insbesondere eine Verschiebung eines Zündwinkels in Richtung "spät" (Spätzündung) umfassen und/oder eine Veränderung einer Abgasrückführrate und/oder eine Veränderung von Ventilsteuerzeiten von Einund/oder Auslassventilen und/oder eine Verstellung einer im Einlasskanal angeordneten Ladungsbewegungsklappe und/oder eine Verstellung einer in einer Luftansaugleitung angeordneten Drosselklappe. Verfügt die fremdgezündete Verbrennungskraftmaschine über eine Kraftstoffdirekteinspritzung, kommt als temperatursteigernde Maßnahme zusätzlich eine Veränderung eines Einspritzzeitpunktes in Frage, eine Splittung einer Einspritzmenge in mehrere während eines Arbeitszyklus eingespritzte Kraftstoffanteile, eine Absenkung eines Lambdawertes in einem Schichtladebetrieb ("Anfettung"), eine Unterdrückung des Schichtladebetriebs zugunsten eines mageren oder stöchiometrischen Homogenbetriebs und/oder eine Unterdrückung des mageren Homogenbetriebs zugunsten des stöchiometrischen Homogenbetriebs. Handelt es sich bei der Verbrennungskraftmaschine auf der anderen Seite um eine (selbstzündende) Dieselbrennkraftmaschine, wird vorzugsweise eine Verschiebung eines Einspritzzeitpunktes, eine Veränderung der Abgasrückführrate, eine Drosselung der Ansaugluft und/oder eine Änderung der Ventilsteuerzeiten der Ein- und Auslassventile zur Anhebung der Katalysatorbeziehungsweise Abgastemperatur durchgeführt.

Die Intensität der temperatursteigernden Maßnahme in Bezug auf ihre Heizwirkung wird vorzugsweise in Abhängigkeit von einer Abweichung der ermittelten Katalysator- und/oder Abgastemperatur von der/den vorgegebenen Temperaturschwelle/n geregelt. Dies ist bei stufenlos oder engstufig beeinflussbaren Maßnahmen, wie zum Beispiel der Verstellung des Zündzeitpunktes oder der Abgasrückführrate, durch entsprechende Regelung problemlos möglich. Bei Maßnahmen hingegen, die in der Wahl zweier Schaltzustände bestehen, beispielsweise der Betriebsartenunterdrückung bei direkteinspritzenden Ottomotoren, erfolgt eine Intensitätsregelung der temperatursteigernden Maßnahme durch entsprechende Regelung der Dauer und Frequenz der in Intervallen zu- und abgeschalteten Maßnahme. Dies führt beispielsweise im Magerbetrieb zu einem Hin- und Herschalten zwischen Schichtbetrieb (mit üblicherweise niedrigen Abgastemperaturen) und Homogenbetrieb (mit wesentlich höheren Abgastemperaturen). Um ein ständiges Hin- und Herschalten zu unterdrücken, kann hier ferner vorgesehen sein, bei solchen Zwei-Zustandsmaßnahmen eine Mindestverweildauer für jeden Schaltzustand vorzugeben, beispielsweise mindestens 5 bis 60 s, insbesondere mindestens 10 bis 15 s. In einer besonders bevorzugten Regelung erfolgt erfindungsgemäß die erste temperatursteigernde Maßnahme durch Androsselung des Leerlaufs (der üblicherweise im Schichtmodus betrieben wird) unter Beibehaltung des Schichtbetriebs, wobei der Saugrohrdruck im Leerlauf auf einen Wert von 600 bis 700 mbar, vorzugsweise auf 640 bis 660 mbar, besonders bevorzugt auf 650 mbar abgesenkt wird.

Optionale Maßnahmen zur Temperatursteigerung, die eine Intensitätssteigerung bewirken, können sein:
- gedrosselter Schichtbetrieb außerhalb Leerlauf bei immer höheren Lasten und Drehzahlen;
- Verzicht auf Schichtbetrieb zugunsten Homogen-Magerbetrieb;
- Verzicht auf Homogen-Magerbetrieb zugunsten homogen-stöchiometrischem Betrieb;
- homogen-stöchiometrischer Betrieb mit Spätzündung.

Gegenstand der Erfindung ist auch eine Vorrichtung zur Durchführung des Verfahrens. Sie umfasst folgende Mittel:
(a) Bestimmung des Energieaustrags aus einem ersten Katalysatorelement, indem der Wärmestrom ermittelt und kumuliert wird;
(b) bei Überschreiten eines ersten vorgebbaren Schwellwertes für den Energieaustrag aus dem ersten Katalysatorelement und vorzugsweise gleichzeitigem Unterschreiten einer vorgebbaren Temperaturminimalschwelle für ein zweites Katalysatorelement - Veranlassung der Durchführung mindestens einer Maßnahme zur Steigerung einer Abgas- und/oder Katalysatortemperatur, vorzugsweise Androsselung des Leerlaufs unter Beibehaltung des Schichtbetriebs;
(c) bei gegebenenfalls Überschreitung eines zweiten vorgebbaren Schwellwertes für den Energieaustrag aus dem ersten Katalysatorelement und vorzugsweise gleichzeitigem Unterschreiten einer vorgebbaren Temperaturminimalschwelle für ein zweites Katalysatorelement - Veranlassung der Durchführung mindestens einer Maßnahme zur Steigerung einer Abgas- und/oder Katalysatortemperatur, vorzugsweise homogen-stöchiometrischer Schichtbetrieb;
(d) gegebenenfalls bereits nach Motorstart Bestimmung der in die Abgasnachbehandlungsanlage eingebrachten Mindest-Energiemenge und bei gegebenenfalls Überschreiten dieser Mindest-Energiemenge nach Motorstart vor der Abgasnachbehandlungsanlage - Veranlassung der Durchführung mindestens einer Maßnahme zur Steigerung einer Abgas- und/oder Katalysatortemperatur.

Diese Mittel umfassen vorzugsweise eine Steuereinheit, in der ein Algorithmus zur Steuerung der Verfahrensschritte in digitaler Form hinterlegt ist. Diese Steuereinheit beziehungsweise der Algorithmus kann besonders bevorzugt in ein Motorsteuergerät integriert sein.

Bei der Verbrennungskraftmaschine handelt es sich nach einer vorteilhaften Ausgestaltung um einen direkteinspritzenden fremdgezündeten Motor (Ottomotor), der vorzugsweise schichtladefähig ist. Ebenso kann die Erfindung aber auch zur Nachbehandlung von Abgasen von Dieselmotoren Verwendung finden.

Im Falle einer direkteinspritzenden schichtladefähigen fremdgezündeten Verbrennungskraftmaschine ist ferner gemäß einer weiteren erfindungsgemäßen Vorrichtung vorgesehen, dass ein Edelmetallgehalt des mindestens einen Katalysators, insbesondere wenigstens eines Vorkatalysators, vorzugsweise aller eingesetzter Katalysatoren, höchstens 3,59 g/dm³ Katalysatorvolumen (100 g/ft³), vorzugsweise höchstens 2,87 g/dm³ (80 g/ft³), beträgt. Bekannte Katalysatorsysteme von direkteinspritzenden schichtladefähigen Ottomotoren weisen erheblich höhere Edelmetallgehalte auf, nämlich mindestens 3,95 g/dm³ (110 g/ft³), typischerweise mindestens 4,67 g/dm³ (130 g/ft³), um im Neuen Europäischen Fahrzyklus (NEFZ) mit thermisch ungeschädigten und schwefelfreien Katalysatoren und einem zeitlichen Schichtbetriebsanteil von mindestens 250 s eine HC-Emission von unter 0,07 g/km und eine NOₓ-Emission von unter 0,05 g/km einzuhalten. (Dabei wird hier ein Katalysator als schwefelfrei bezeichnet, der eine eingespeicherte Schwefelmasse unterhalb von 0,2 g/dm³ Katalysatorvolumen aufweist.) Diese hohen Edelmetallbeschickungen gemäß Stand der Technik wirken dem alterungsbedingten Anstieg der Lightoff-Temperatur entgegen. Durch das vorstehend beschriebene erfindungsgemäße Verfahren kann insbesondere bei gealterten Abgasreinigungssystemen eine Eingrenzung des Arbeitstemperaturfensters auf den hochwirksamen Arbeitsbereich erzielt werden. So wurde beim Einsatz eines Katalysatorsystems mit einem erfindungsgemäß edelmetallreduzierten Vorkatalysator, der einer künstlichen Ofenalterung bei 1100 °C über 4 Stunden in einer Atmosphäre mit 2 % O₂ und 10 % H₂O unterzogen wurde, und unter Anwendung des erfindungsgemäßen Verfahrens im NEFZ eine HC-Emission von 0,1 g/km und eine NOₓ-Emission von 0,08 g/km nicht überschritten. Durch die Absenkung des Edelmetallgehaltes in Kombination mit der Anwendung des erfindungsgemäßen Verfahrens ist die Einhaltung gesetzlicher Abgasgrenzwerte somit auf kostengünstigere Weise realisierbar.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Anordnung einer Verbrennungskraftmaschine mit nachgeschaltetem Abgasnachbehandlungssystem;
- Figur 2: ein Fließdiagramm eines Ablaufs des erfindungsgemäßen Verfahrens gemäß einer vorteilhaften Ausführung;
- Figur 3: einen Verlauf der Katalysatoraktivität gemäß erfindungsgemäßem Verfahren in Abhängigkeit vom Energieaustrag und
- Figur 4: einen kumulierten Zeitanteil des Verbots des Schichtbetriebs im Leerlauf im N E FZ.

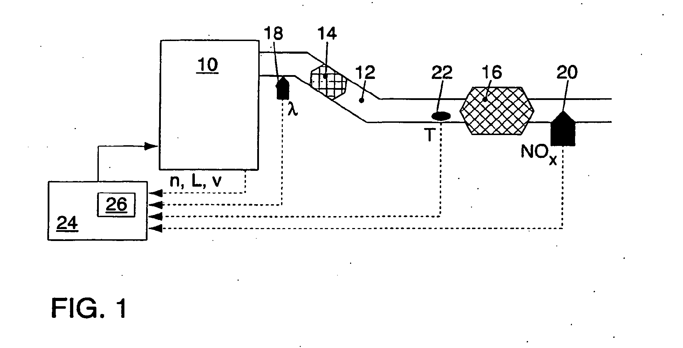

Bei der in Figur 1 dargestellten Verbrennungskraftmaschine 10 handelt es sich bevorzugt um einen mit einer nicht dargestellten Kraftstoffdirekteinspritzung ausgestatteten Ottomotor, der im Niedrig- und Teilllastbereich zu einem mageren Schichtladebetrieb befähigt ist. In dem verbrauchsgünstigen mageren Schichtladebetrieb wird - im Gegensatz zu einem Homogenbetrieb - eine zündfähige Kraftstoffwolke lediglich im Bereich einer Zündkerze erzeugt, während im übrigen Brennraum annähernd reine Luft vorliegt. Die Erzeugung und Stabilisierung der Kraftstoffwolke wird durch einen späten Einspritzzeitpunkt bewirkt und kann ferner durch bekannte bauliche Maßnahmen, etwa einer in einem Lufteinlasskanal angeordneten Ladungsbewegungsklappe und/oder einer muldenartigen Ausgestaltung eines Kolbenbodens, unterstützt werden.

Ein von der Verbrennungskraftmaschine 10 erzeugtes Abgas wird durch einen Abgaskanal 12 geleitet, in dem ein Katalysatorsystem angeordnet ist, welches einen Vorkatalysator 14, vorzugsweise einen 3-Wege-Katalysator, und einen NOₓ-Speicherkatalysator 16 als Hauptkatalysator umfasst. Der Vorkatalysator 14 sowie der NOₓ-Speicherkatalysator 16 weisen vorzugsweise einen Edelmetallgehalt von weniger als 2,87 g/dm³ Katalysatorvolumen (80 g/ft³) auf. Im Abgaskanal 12 sind ferner verschiedene Sensoren angeordnet, die eine Steuerung der Verbrennungskraftmaschine 10, insbesondere im Sinne einer Einhaltung vorgebbarer Katalysatortemperaturen und -aktivitäten, ermöglichen und die unter anderem die Bestimmung des Energieaustrags über die Ermittlung des Wärmestroms aus dem Katalysatorelement 14 gestattet.

Insbesondere erfolgt eine Regelung eines der Verbrennungskraftmaschine 10 zuzuführenden Luft-Kraftstoff-Gemisches auf eine Lambda-Sollvorgabe durch eine stromauf des Katalysatorsystems 14, 16 angeordnete Lambdasonde 18 (Lambdaregelung). Ferner wird eine NOₓ-Endemission (NOₓ-Durchbruch) mit Hilfe eines stromab des Speicherkatalysators 16 angeordneten NOₓ-Sensors 20 überwacht. Schließlich erfasst ein in Nähe (stromauf oder stromab) des NOₓ-Speicherkatalysators 16 angeordneter Temperatursensor 22 eine Abgastemperatur, aus welcher eine Katalysatortemperatur des Speicherkatalysators 16 abgeleitet werden kann. Alternativ kann die Katalysatortemperatur auch in Abhängigkeit geeigneter Betriebsparameter der Verbrennungskraftmaschine 10, etwa einer Motordrehzahl n, einer Motorlast L, und/oder einer Fahrzeuggeschwindigkeit v, berechnet werden.

Alle Sensorsignale sowie die Betriebsparameter der Verbrennungskraftmaschine 10 finden Eingang in ein Motorsteuergerät 24, das in Abhängigkeit dieser Daten die Verbrennungskraftmaschine 10 steuert. Das Motorsteuergerät 24 umfasst eine Steuereinheit 26, in der ein Algorithmus hinterlegt ist, welcher neben einer Alterung des Katalysatorsystems den Energieaustrag aus dem Vorkatalysator 14 bestimmt und in Abhängigkeit der mindestens zwei vorgegebenen Energieaustragsschwellwerte für Vorkatalysator 14 und der vorgebbaren Temperaturminimalschwelle für die Temperatur des NOₓ-Speicherkatalysators 16 bei Überschreitung der ersten Energieaustragsschwelle oder beider Schwellwerte und gleichzeitigem Unterschreiten der Temperaturminimalschwelle für den NOₓ-Speicherkatalysator 16 mindestens eine temperatursteigernde Maßnahme durchführt.

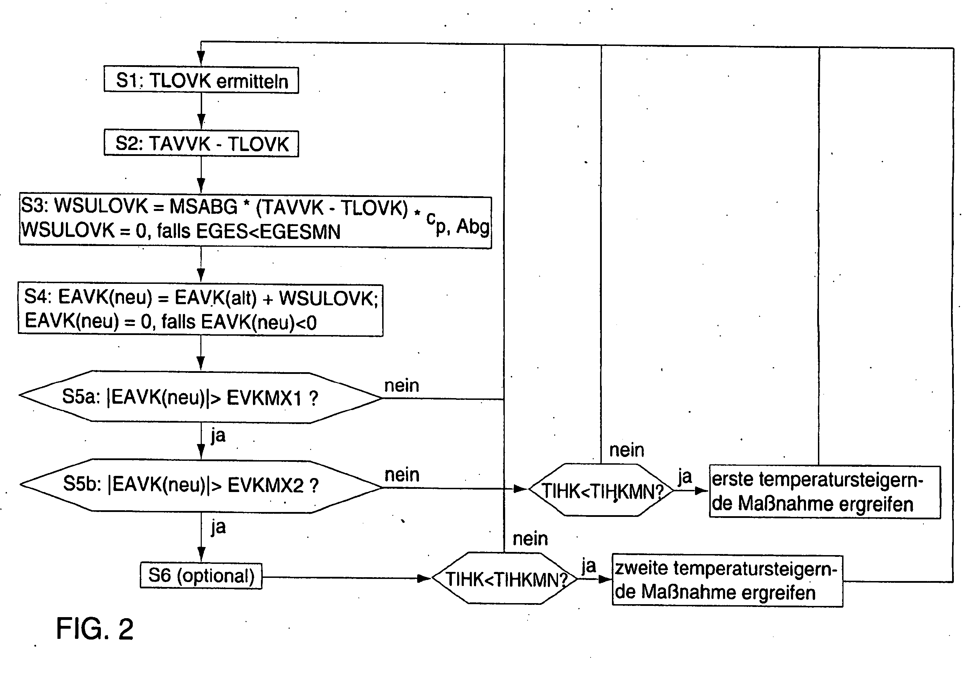

Ein bevorzugter Ablauf des durch die Steuereinheit 26 gesteuerten Verfahrensablaufs ist in Figur 2 dargestellt.

Im Folgenden wird das Verfahren anhand eines Temperaturmanagements am Vorkatalysator eines direkteinspritzenden schichtladefähigen Ottomotors mit 1,6 Litern Hubraum und 81 kW Nennleistung näher erläutert:
- In einem ersten Schritt S1 wird eine Lightoff-Temperatur des Vorkatalysators 14 (TLOKV) ermittelt. Diese kann entweder einen Festwert darstellen oder mit Werten der mittels bekannter Diagnoseverfahren (zum Beispiel Messung der Sauerstoffspeicherfähigkeit OSC) ermittelten Vorkatalysator-Desaktivierung korreliert werden. Unter Lightoff- oder Anspringtemperatur wird hier nicht die übliche Schwelle einer 50%-Konvertierung verstanden, sondern eine Temperaturschwelle, bei deren Unterschreiten der Katalysator ein für eine spezifische Motor-Fahrzeug-Kombination kritisches Emissionsverhalten zeigt. Als Anhaltswert für einen frischen Vorkatalysator kann hier ein Wert von 280 °C angenommen werden. Für einen Vorkatalysator am Ende der Fahrzeuglebensdauer, der die EU IV-Grenzwerte noch einhält, steigt TLOVK auf zirka 360 °C an. Für andere Motoren und Katalysatoren können hier vollkommen andere Werte gelten, so dass die Zahlenwerte nur als beispielhafte Darstellungen zu verstehen sind.
- In einem zweiten Schritt S2 wird die Temperaturdifferenz zwischen der durch Messung oder Modellierung ermittelten Abgastemperatur vor Vorkatalysator TAVVK und TLOVK durch Subtraktion ermittelt (TAVVK - TLOVK).
- In einem dritten Schritt S3 wird der die Lightoff-Temperatur des Vorkatalysators 14 unterschreitende Wärmestrom WSULOVK durch Multiplikation der unter dem Schritt S2 ermittelten Temperaturdifferenz mit dem Abgasmassenstrom MSABG und der spezifischen Wärmekapazität ermittelt, also WSULOVK = (TAWK - TLOVK) * C_{p,Abg} * MSABG. Der Wärmestrom wird mit einem vorgebbaren Schwellwert EGESMN für den Gesamtenergiestrom EGES [EGES = MSABG * C_{P,Abg} * (TAVVK-Umgebungstemperatur)] verglichen. Solange der über die Abgasenergie in das Abgassystem eingetragene Gesamtenergiestrom nicht die vorgebbare Schwelle EGESMN überschritten hat, wird WSULOVK zu Null gesetzt (Blockieren der Funktion nach Motorstart während der ersten Durchwärmung der Abgasanlage).
- In einem vierten Schritt S4 wird WSULOVK kumuliert, das heißt in einem Integrator aufintegriert, und bildet den tatsächlichen Energieaustrag EAVK(neu) aus dem Vorkatalysator 14. Dabei wird der Integratorausgang bei erneuter Durchwärmung des Katalysators zu Null begrenzt. Länger anstehende hohe Abgastemperaturen sollen kein "Polster" für die nächste Phase der Beaufschlagung mit kaltem Abgas aufbauen. EAVK(neu) = EAVK(alt) + WSULOVK, wobei EAVK(alt) = kumulierter Wärmestrom des letzten Rechenschrittes ist.
- In einem fünften Schritt S5a wird geprüft, ob der Betrag von EAVK(neu) einen ersten Schwellwert EVKMX1 überschreitet. Ist dies nicht der Fall, sind keine Maßnahmen notwendig. Falls jedoch diese Schwelle überschritten wird, wird in Schritt S5b geprüft, ob ein zweiter Schwellwert EVKMX2 (> EVKMX1) überschritten wird. Falls dies nicht der Fall ist, wird weiterhin die Temperatur in dem nachgeschalteten Hauptkatalysator 16 TIHK geprüft um festzustellen, ob diese eine Temperaturminimalschwelle TIHKMN unterschreitet. Bei hinreichend warmem Hauptkatalysator kann dieser die gesamte Konvertierungsleistung übernehmen und besondere temperatursteigernde Maßnahmen können somit unterbleiben. Auch TIHK kann bekanntermaßen als Festwert oder - besser - als Variable festgelegt werden, die mit zunehmender Alterung des Hauptkatalysators ansteigt (Verfahren analog Vorkatalysator). Unterhalb des ersten Schwellwertes werden keinerlei Maßnahmen ergriffen, da eine gewisse Teil-Auskühlung des Vorkatalysators toleriert werden kann. Wird aber der erste Schwellwert EVKMX1 überschritten und ist vorzugsweise auch der Hauptkatalysator hinreichend kalt TIHK < TIHKMN, so wird eine erste, die Abgas- und/oder Katalysatortemperatur steigernde Maßnahme ergriffen. Vorzugsweise wird hier der Leerlauf (der üblicherweise im Schichtmodus betrieben wird) unter Beibehaltung des Schichtbetriebs stärker gedrosselt. Alternativ kann zum Beispiel in einen stark abgemagerten Homogenmodus umgeschaltet werden. Die erste temperatursteigernde Maßnahme wird zurückgenommen, wenn der Betrag von EAVK(neu) einen Minimalwert EVKMN1 unterschreitet, dieser liegt sinnvollerweise bei Null. (In diesem Ausführungsbeispiel wird die erste Maßnahme auch zurückgenommen, wenn kein Leerlaufbetriebszustand mehr vorliegt).
- In einem optionalen sechsten Schritt S6 wird geprüft, ob der Energieaustrag |EAVK(neu)| trotz Ergreifens einer ersten temperatursteigernden Maßnahme einen zweiten Schwellwert EVKMX2 überschreitet. Ist dies der Fall, wird geprüft, ob die Temperatur in dem nachgeschalteten Hauptkatalysator TIHK die vorgebbare Temperaturminimalschwelle TIHKMN unterschreitet. Wird auch der zweite Schwellwert für den Energieaustrag überschritten und ist vorzugsweise auch der Hauptkatalysator hinreichend kalt, so wird eine weitere, die Abgas- und/oder Katalysatortemperatur steigernde Maßnahme ergriffen, die in ihrer Intensität stärker ist als eine erste Maßnahme. Vorzugsweise wird hier der Leerlauf in einem stöchiometrischen Homogenmodus betrieben. Die zweite temperatursteigernde Maßnahme wird zurückgenommen, wenn der Energieaustrag |EAVK(neu)| einen Minimalwert EVKMN2 unterschreitet, dieser liegt sinnvollerweise unterhalb EVKMN1, idealerweise identisch mit EVKMN1 bei Null, (In diesem Ausführungsbeispiel wird die zweite Maßnahme auch zurückgenommen, wenn kein Leerlaufbetriebszustand mehr vorliegt).

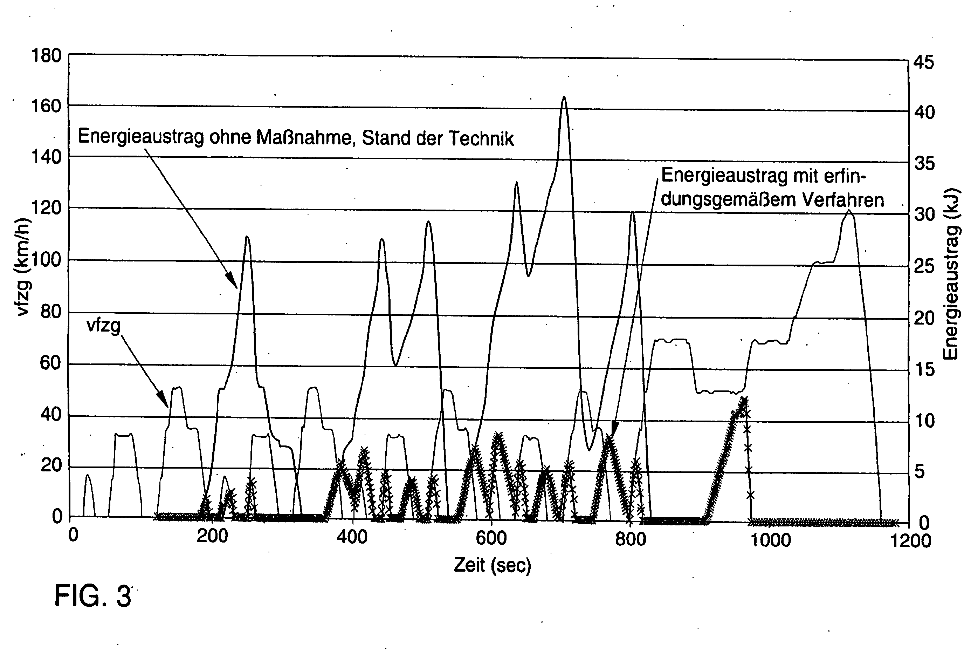

Figur 3 zeigt den Verlauf einer Katalysatoraktivität in Abhängigkeit vom Energieaustrag

An einem Fahrzeug mit 1250 kg Testgewicht und einem direkteinspritzenden schichtladefähigen Ottomotor mit 1,6 l Hubraum und 81 kW Nennleistung wurde das Verfahren getestet. In der Abgasanlage des Fahrzeugs war ein Vorkatalysator mit 0,45 l Volumen und 3-Wege-Beschichtung sowie ein NOₓ-Speicherkatalysator mit 1,67 l Volumen verbaut. Das Katalysatorsystem war zuvor am Motorprüfstand durch Betrieb mit unzulässig hohen Temperaturen sowie mit Zündaussetzern irreversibel thermisch geschädigt worden.
- Die mit frischem Katalysatorsystem im NEFZ gemessenen Verbräuche und HC-Emissionen werden zu 100 % gesetzt. Die HC-Emissionen liegen um zirka 40 % unter dem EU IV-Grenzwert.
- Mit dem gealterten Katalysatorsystem wurde ohne jegliche Maßnahme eine HC-Emission von 214 % bei gleichem Verbrauch erreicht.
- Bei generellem Schichtbetriebsverbot im Leerlauf wurde eine HC-Emission von 142 % bei einem Verbrauch von 102,4 % gemessen.
- Erfindungsgemäß wurde für den letzten Versuchsabschnitt ein Schichtbetriebsverbot im Leerlauf nur nach Überschreiten eines Energieaustrags aus dem Vorkatalysator von 5 kJ gesetzt (EVKMX1 = 5 kJ). Die Temperaturschwelle TLOVK wurde auf 320 °C festgesetzt. Damit wird in 86 s des NEFZ der Schichtbetrieb im Leerlauf freigegeben. Die HC-Emissionen betragen 155 % des Frischzustandes und der Verbrauch liegt bei 101,5 % des Frischzustandes. Somit kann eine deutliche Verbrauchsminderung gegenüber dem Stand der Technik bei nur geringer Zunahme der HC-Emission erreicht werden.

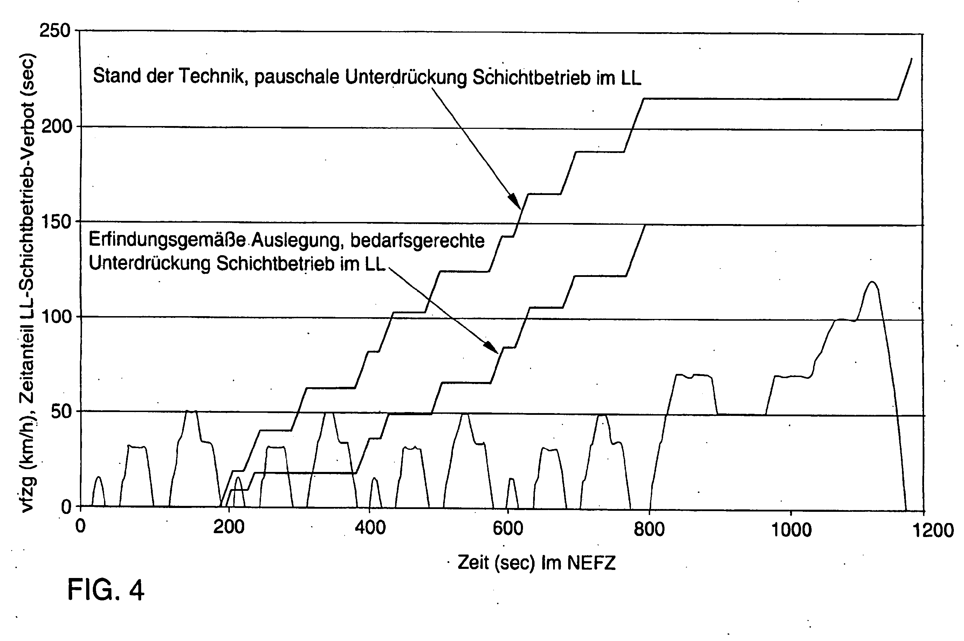

Die erfolgreiche Auswirkung durch die erfindungsgemäß bedarfsgerechte Unterdrückung des Leerlaufs kann der Figur 4 entnommen werden.

### BEZUGSZEICHENLISTE

- 10: Verbrennungskraftmaschine
- 12: Abgaskanal
- 14: erstes Katalysatorelement (Vorkatalysator)
- 16: zweites Katalysatorelement (Hauptkatalysator / NOₓ-Speicherkatalysator)
- 18: Lambdasonde
- 20: NOₓ-Sensor
- 22: Temperatursensor
- 24: Motorsteuergerät
- 26: Steuereinheit
- 28: Katalysatoraktivität neuer Katalysator
- 30: Katalysatoraktivität gealterter Katalysator
- 32: Temperaturbereich konventioneller Ottomotor
- 34: Temperaturbereich direkteinspritzender Ottomotor
- S1: Bestimmung der Lightoff-(Anspring)temperatur von Vorkatalysator
- S2: Differenzbildung zwischen Abgastemperatur vor Vorkatalysator und Anspringtemperatur
- S3: Ermittlung des die Anspringtemperatur unterschreitenden Wärmestroms
- S4: Bildung des Energieaustrags aus Vorkatalysator durch Kumulierung des Wärmestroms
- S5: Prüfung, ob Energieaustrag einen ersten Schwellwert überschreitet, wenn nein: keine Maßnahme,
wenn ja: Prüfung, ob Temperaturminimalwert von Hauptkatalysator unterschritten, (optionale Unterschritte)
wenn nein: keine Maßnahme, (optionale Unterschritte)
wenn ja: erste temperatursteigernde Maßnahmen einleiten
- S6: Prüfung, ob Energieaustrag einen weiteren Schwellwert überschreitet,
wenn ja: Prüfung, ob Temperaturminimalwert von Hauptkatalysator unterschritten, (optionale Unterschritte)
wenn nein: keine Maßnahme, (optionale Unterschritte)
wenn ja: verstärkte temperatursteigernde Maßnahmen einleiten

## Patentansprüche

1. Verfahren zum Betrieb einer einer Verbrennungskraftmaschine (10) nachgeschalteten Abgasnachbehandlungsanlage, umfassend ein Katalysatorsystem mit mindestens einem ersten Katalysatorelement (14) unter Einbeziehung einer elektronischen Motorsteuerung mit bevorzugt integrierter Steuereinheit (24, 26), **dadurch gekennzeichnet, dass** der tatsächliche Energieaustrag aus dem ersten Katalysatorelement (14) ermittelt wird, indem der Wärmestrom ermittelt und kumuliert wird, und als Bezugsgröße für mindestens eine temperatursteigernde Maßnahme für den Abgasstrom und/oder Katalysator eingesetzt wird, wobei mindestens ein Schwellwert für diesen Energieaustrag vorgegeben wird.

2. Verfahren nach Anspruch 1, **dadurch gekennzeichnet, dass** das Katalysatorsystem zusätzlich zu einem ersten Katalysatorelement (14) mindestens ein zweites Katalysatorelement (16) aufweist.

3. Verfahren nach Anspruch 1 oder 2, **dadurch gekennzeichnet, dass** mindestens zwei Schwellwerte für den Energieaustrag aus dem ersten Katalysatorelement (14) vorgegeben werden.

4. Verfahren nach einem der Ansprüche 1 bis 3, **dadurch gekennzeichnet, dass** die Ermittlung des Energieaustrags nach Beendigung einer nach einem Motorstart anschließenden Warmlaufphase durchgeführt wird.

5. Verfahren nach Anspruch 4, **dadurch gekennzeichnet, dass** die Ermittlung des Energieaustrags in einer Niedriglastphase, insbesondere in einer Leerlaufphase, durchgeführt wird.

6. Verfahren nach einem der Ansprüche 1 bis 5, **dadurch gekennzeichnet, dass** von der Motorsteuerung (26) Maßnahmen zur Erhöhung der Abgas- und/oder Katalysatortemperatur getroffen werden, wenn der Energieaustrag aus dem ersten Katalysatorelement (14) oberhalb eines ersten vorgebbaren Schwellwertes liegt.

7. Verfahren nach einem der Ansprüche 1 bis 6, **dadurch gekennzeichnet, dass** von der Motorsteuerung (26) Maßnahmen zur Erhöhung der Abgas- und/oder Katalysatortemperatur getroffen werden, wenn der Energieaustrag aus dem ersten Katalysatorelement (14) oberhalb eines ersten vorgebbaren Schwellwertes liegt und gleichzeitig die Temperaturminimalschwelle für das zweite Katalysatorelement (16) unterschritten wird.

8. Verfahren nach einem der Ansprüche 1 bis 7, **dadurch gekennzeichnet, dass** von der Motorsteuerung (26) Maßnahmen zur Erhöhung der Abgas- und/oder Katalysatortemperatur getroffen werden, wenn der Energieaustrag aus dem ersten Katalysatorelement (14) oberhalb eines zweiten vorgebbaren Schwellwertes liegt.

9. Verfahren nach einem der Ansprüche 1 bis 8, **dadurch gekennzeichnet, dass** von der Motorsteuerung (26) Maßnahmen zur Erhöhung der Abgas- und/oder Katalysatortemperatur getroffen werden, wenn der Energieaustrag aus dem ersten Katalysatorelement (14) oberhalb eines zweiten vorgebbaren Schwellwertes liegt und gleichzeitig die Temperaturminimalschwelle für das zweite Katalysatorelement (16) unterschritten wird.

10. Verfahren nach einem der Ansprüche 1 bis 9, **dadurch gekennzeichnet, dass** man zur Ermittlung des Energieaustrags zuerst den eine Lightoff-Temperatur für das erste Katalysatorelement (14) unterschreitenden Wärmestrom durch Multiplikation des Abgasmassenstroms mit der spezifischen Wärmekapazität und mit der Differenz aus der durch Messung oder Modellierung ermittelten Abgastemperatur des ersten Katalysatorelements (14) und der Lightoff-Temperatur des ersten Katalysatorelements (14) ermittelt und diesen anschließend kumuliert beziehungsweise aufintegriert, wobei der Integratorausgang bei erneuter Durchwärmung des Katalysators zu Null begrenzt wird.

11. Verfahren nach Anspruch 10, **dadurch gekennzeichnet, dass** der Wärmestrom mit einem in die Abgasnachbehandlungsanlage vorgebbaren Schwellwert für die Gesamtenergie verglichen und zu Null gesetzt wird, solange die Schwelle für die Gesamtenergie nicht überschritten wird, um die Funktion nach Motorstart für die erste Durchwärmung zu sperren.

12. Verfahren nach einem der Ansprüche 1 bis 11, **dadurch gekennzeichnet, dass** temperatursteigernde Maßnahmen wieder zurückgenommen werden, wenn der Energieaustrag jeweils einen vorgebbaren Minimalwert unterschreitet.

13. Verfahren nach einem der Ansprüche 1 bis 9, **dadurch gekennzeichnet, dass** die Intensität der temperatursteigernden Maßnahmen hinsichtlich einer Heizwirkung der Maßnahme in Abhängigkeit von einer Abweichung des ermittelten Energieaustrags aus dem ersten Katalysatorelement (14) und vorzugsweise zusätzlich der Temperaturminimalschwelle des zweiten Katalysatorelements (16) geregelt wird.

14. Verfahren nach einem der Ansprüche 1 bis 13, **dadurch gekennzeichnet, dass** als temperatursteigernde Maßnahme eine motorische Maßnahme zur Steigerung der Abgas- und/oder Katalysatortemperatur und/oder zur Erhöhung eines Schadstoffanteils oxidierbarer Komponenten des Abgases erfolgt.

15. Verfahren nach Anspruch 11, **dadurch gekennzeichnet, dass** als erste temperatursteigernde Maßnahme eine Androsselung des Leerlaufs unter Beibehaltung des Schichtbetriebs erfolgt, wobei der Saugrohrdruck im Leerlauf bevorzugt auf einen Wert von 600-700 mbar abgesenkt wird.

16. Verfahren nach einem der Ansprüche 1 bis 10 und 12 bis 15, **dadurch gekennzeichnet, dass** die Regelung der "Katheizfunktion" in der Motorstartphase über eine vorgebbare Mindest-Energiemenge für die Abgasnachbehandlungsanlage gesteuert wird, wobei die Mindest-Energiemenge als Produkt des Abgasmassenstroms, der spezifischen Wärmekapazität und der Abgastemperatur vor dem ersten Katalysatorelement (14) minus Umgebungstemperatur ermittelt wird, und nach Überschreiten dieser Schwelle temperatursteigernde Maßnahmen eingeleitet werden.

17. Vorrichtung zum optimalen Betrieb einer einer Verbrennungskraftmaschine (10) nachgeschalteten Abgasnachbehandlungsanlage umfassend ein Katalysatorsystem mit einem ersten Katalysatorelement (14) und einem zweiten Katalysatorelement (16) und unter Einbeziehung einer elektronischen Motorsteuerung mit integrierter Steuereinheit (24, 26) umfassend Mittel, mit denen die folgenden Verfahrensschritte durchführbar sind:
(a) Bestimmung des Energieaustrags aus dem ersten Katalysatorelement (14), indem der Wärmestrom ermittelt und kumuliert wird,
(b) bei Überschreiten eines ersten vorgebbaren Schwellwertes für den Energieaustrag aus dem ersten Katalysatorelement (14) und vorzugsweise gleichzeitigem Unterschreiten der Temperaturminimalschwelle für das zweite Katalysatorelement (16) - Veranlassung der Durchführung mindestens einer Maßnahme zur Steigerung einer Abgas- und/oder Katalysatortemperatur,
(c) gegebenenfalls bei Überschreitung eines zweiten vorgebbaren Schwellwertes für den Energieaustrag aus dem ersten Katalysatorelement (14) und vorzugsweise gleichzeitigem Unterschreiten der Temperaturminimalschwelle für das zweite Katalysatorelement (16) - Veranlassung der Durchführung mindestens einer Maßnahme zur Steigerung einer Abgas- und/oder Katalysatortemperatur.

18. Vorrichtung nach Anspruch 17 umfassend weitere Mittel, mit denen die folgenden Verfahrensschritte durchführbar sind:
(d) Ermittlung der Mindest-Energiemenge in der Motorstartphase vor der Abgasnachbehandlungsanlage, bei Überschreitung einer vorgebbaren Schwelle für diese Mindest-Energiemenge - Veranlassung der Durchführung mindestens einer Maßnahme zur Steigerung einer Abgas- und/oder Katalysatortemperatur.

19. Vorrichtung nach Anspruch 17 oder 18, **dadurch gekennzeichnet, dass** die Mittel eine Steuereinheit (26) umfassen, in der ein Algorithmus zur Steuerung der Verfahrensschritte in digitaler Form hinterlegt ist.

20. Vorrichtung nach Anspruch 19, **dadurch gekennzeichnet, dass** die Steuereinheit (26) und/oder der Algorithmus in ein Motorsteuergerät (24) integriert ist.

## Claims

1. Method for operating an exhaust-gas aftertreatment system which is positioned downstream of an internal combustion engine (10), comprising a catalytic converter system with at least one first catalytic converter element (14), incorporating an electronic engine controller with a preferably integrated control unit (24, 26), **characterized in that** the actual energy output from the first catalytic converter element (14) is determined by virtue of the heat flow being determined and cumulated and being used as a reference variable for at least one temperature-increasing measure for the exhaust-gas flow and/or catalytic converter, with at least one threshold value for said energy output being predefined.

2. Method according to Claim 1, **characterized in that** the catalytic converter system has at least one second catalytic converter element (16) in addition to a first catalytic converter element (14).

3. Method according to Claim 1 or 2, **characterized in that** at least two threshold values for the energy output from the first catalytic converter element (14) are predefined.

4. Method according to one of Claims 1 to 3, **characterized in that** the determination of the energy output is carried out after the end of a warm-running phase which follows an engine start.

5. Method according to Claim 4, **characterized in that** the determination of the energy output is carried out in a low-load phase, in particular in an idle phase.

6. Method according to one of Claims 1 to 5, **characterized in that** measures for increasing the exhaust-gas temperature and/or catalytic converter temperature are implemented by the engine controller (26) if the energy output from the first catalytic converter element (14) lies above a first predefinable threshold value.

7. Method according to one of Claims 1 to 6, **characterized in that** measures for increasing the exhaust-gas temperature and/or catalytic converter temperature are implemented by the engine controller (26) if the energy output from the first catalytic converter element (14) lies above a first predefinable threshold value and the temperature minimum threshold for the second catalytic converter element (16) is simultaneously undershot.

8. Method according to one of Claims 1 to 7, **characterized in that** measures for increasing the exhaust-gas temperature and/or catalytic converter temperature are implemented by the engine controller (26) if the energy output from the first catalytic converter element (14) lies above a second predefinable threshold value.

9. Method according to one of Claims 1 to 8, **characterized in that** measures for increasing the exhaust-gas temperature and/or catalytic converter temperature are implemented by the engine controller (26) if the energy output from the first catalytic converter element (14) lies above a second predefinable threshold value and the temperature minimum threshold for the second catalytic converter element (16) is simultaneously undershot.

10. Method according to one of Claims 1 to 9, **characterized in that**, to determine the energy output, firstly the heat flow which falls below a light-off temperature for the first catalytic converter element (14) is determined by multiplying the exhaust-gas mass flow with the specific heat capacity and with the difference between the exhaust-gas temperature, determined by measurement or modelling, of the first catalytic converter element (14) and the light-off temperature of the first catalytic converter element (14), and said heat flow is subsequently cumulated or integrated, with the integrator output being limited to zero in the event of renewed full heating of the catalytic converter.

11. Method according to Claim 10, **characterized in that** the heat flow is compared with a threshold value, which can be predefined in the exhaust-gas aftertreatment system for the overall energy, and is set to zero for as long as the threshold for the overall energy is not exceeded, in order to inhibit the function after an engine start for the first full heating.

12. Method according to one of Claims 1 to 11, **characterized in that** temperature-increasing measures are withdrawn again if the energy output undershoots in each case a predefinable minimum value.

13. Method according to one of Claims 1 to 9, **characterized in that** the intensity of the temperature-increasing measures with regard to a heating action of the measure is regulated as a function of a deviation of the determined energy output from the first catalytic converter element (14), and preferably additionally of the temperature minimum threshold of the second catalytic converter element (16).

14. Method according to one of Claims 1 to 13, **characterized in that**, as a temperature-increasing measure, an engine-internal measure is carried out in order to increase the exhaust-gas temperature and/or catalytic converter temperature and/or to increase a pollutant proportion of oxidizable components of the exhaust gas.

15. Method according to Claim 11, **characterized in that**, as a first temperature-increasing measure, throttling is carried out in idle operation while stratified operation is maintained, with the induction pipe pressure in idle operation preferably being reduced to a value of 600-700 mbar.

16. Method according to one of Claims 1 to 10 and 12 to 15, **characterized in that** the regulation of the "catalytic converter heating function" in the engine start phase is controlled by means of a predefinable minimum energy quantity for the exhaust-gas aftertreatment system, with the minimum energy quantity being determined as a product of the exhaust-gas mass flow, of the specific heat capacity and of the exhaust-gas temperature upstream of the first catalytic converter element (14) minus the ambient temperature, and with temperature-increasing measures being initiated after said threshold is exceeded.

17. Device for the optimum operation of an exhaust-gas aftertreatment system which is positioned downstream of an internal combustion engine (10), comprising a catalytic converter system with a first catalytic converter element (14) and a second catalytic converter element (16) and incorporating an electronic engine controller with an integrated control unit (24, 26) comprising means with which the following method steps can be carried out:
(a) determining the energy output from the first catalytic converter element (14) by virtue of the heat flow being determined and cumulated,
(b) initiating at least one measure for increasing an exhaust-gas temperature and/or catalytic converter temperature in the event of the exceedance of a first predefinable threshold value for the energy output from the first catalytic converter element (14) and the preferably simultaneous undershooting of the temperature minimum threshold for the second catalytic converter element (16),
(c) if appropriate, initiating at least one measure for increasing an exhaust-gas temperature and/or catalytic converter temperature in the event of the exceedance of a second predefinable threshold value for the energy output from the first catalytic converter element (14) and the preferably simultaneous undershooting of the temperature minimum threshold for the second catalytic converter element (16).

18. Device according to Claim 17, comprising further means with which the following method steps can be carried out:
(d) determining the minimum energy quantity upstream of the exhaust-gas aftertreatment system in the engine start phase, and initiating at least one measure for increasing an exhaust-gas temperature and/or catalytic converter temperature in the event of the exceedance of a predefinable threshold for said minimum energy quantity.

19. Device according to Claim 17 or 18, **characterized in that** the means comprise a control unit (26) in which an algorithm for controlling the method steps is stored in digital form.

20. Device according to Claim 19, **characterized in that** the control unit (26) and/or the algorithm are/is integrated into an engine control unit (24).

## Revendications

1. Procédé de conduite d'une installation de traitement des gaz d'échappement raccordée en aval d'un moteur à combustion interne (10) et comprenant un système de catalyse qui présente au moins un premier élément de catalyseur (14) et qui incorpore une commande électronique du moteur dotée d'une unité de commande (24, 26) de préférence intégrée,
**caractérisé en ce que**
l'extraction effective d'énergie hors du premier élément de catalyseur (14) est déterminée en déterminant et cumulant le débit de chaleur, et est utilisée comme grandeur de référence pour au moins une disposition qui augmente la température de l'écoulement de gaz d'échappement et/ou la température du catalyseur et
**en ce qu'**au moins une valeur de seuil de cette extraction d'énergie est prédéterminée.

2. Procédé selon la revendication 1, **caractérisé en ce que** le système de catalyse présente en plus du premier élément de catalyseur (14) au moins un deuxième élément de catalyseur (16).

3. Procédé selon les revendications 1 ou 2, **caractérisé en ce qu'**au moins deux valeurs de seuil de l'extraction d'énergie hors du premier élément de catalyseur (14) sont prédéterminées.

4. Procédé selon l'une des revendications 1 à 3, **caractérisé en ce que** la détermination de l'extraction d'énergie est réalisée lorsqu'une phase d'échauffement qui suit le démarrage du moteur s'est terminée.

5. Procédé selon la revendication 4, **caractérisé en ce que** la détermination de l'extraction d'énergie est réalisée pendant une phase à faible charge et en particulier pendant une phase de fonctionnement à vide.

6. Procédé selon l'une des revendications 1 à 5, **caractérisé en ce que** la commande (26) du moteur prend des dispositions d'augmentation de la température des gaz d'échappement et/ou de la température du catalyseur si l'extraction d'énergie hors du premier élément de catalyseur (14) est supérieure à une première valeur de seuil prédéterminée.

7. Procédé selon l'une des revendications 1 à 6, **caractérisé en ce que** la commande (26) du moteur prend des dispositions d'augmentation de la température des gaz d'échappement et/ou de la température du catalyseur si l'extraction d'énergie hors du premier élément de catalyseur (14) est supérieure à une première valeur de seuil prédéterminée et si en même temps un seuil minimum de température du deuxième élément de catalyseur (16) n'est pas atteint.

8. Procédé selon l'une des revendications 1 à 7, **caractérisé en ce que** la commande (26) du moteur prend des dispositions d'augmentation de la température des gaz d'échappement et/ou de la température du catalyseur si l'extraction d'énergie hors du premier élément de catalyseur (14) est supérieure à une deuxième valeur de seuil prédéterminée.

9. Procédé selon l'une des revendications 1 à 8, **caractérisé en ce que** la commande (26) du moteur prend des dispositions d'augmentation de la température des gaz d'échappement et/ou de la température du catalyseur si l'extraction d'énergie hors du premier élément de catalyseur (14) est supérieure à une deuxième valeur de seuil prédéterminée et si en même temps le seuil minimum de température du deuxième élément de catalyseur (16) n'est pas atteint.

10. Procédé selon l'une des revendications 1 à 9, **caractérisé en ce que** pour déterminer l'extraction d'énergie, on détermine d'abord le débit de chaleur qui ne fait pas atteindre la température d'extinction du premier élément de catalyseur (14) en multipliant le débit massique des gaz d'échappement par leur capacité calorifique spécifique et par la différence entre la température des gaz d'échappement du premier élément de catalyseur (14), déterminée par mesure ou modélisation, et la température d'extinction du deuxième élément de catalyseur (14), en les intégrant ensuite respectivement de manière cumulée, la sortie de l'intégrateur étant limitée à zéro lorsque le catalyseur s'est de nouveau échauffé à coeur.

11. Procédé selon la revendication 10, **caractérisé en ce que** le débit thermique est comparé à une valeur de seuil prédéterminée de l'énergie totale de l'installation de traitement des gaz d'échappement et est posée égale à zéro tant que le seuil d'énergie totale n'est pas atteint, pour bloquer la fonction après un démarrage de moteur pour le premier réchauffement.

12. Procédé selon l'une des revendications 1 à 11, **caractérisé en ce que** les dispositions d'augmentation de la température sont de nouveau prises si l'extraction d'énergie n'atteint pas une valeur minimale prédéterminée correspondante.

13. Procédé selon l'une des revendications 1 à 9, **caractérisé en ce que** l'intensité des dispositions d'augmentation de la température est régulée en fonction de l'efficacité des dispositions de chauffage sur base de l'écart entre l'extraction d'énergie déterminée hors du premier élément de catalyseur (14) et de préférence de plus sur base du seuil minimum de température du deuxième élément de catalyseur (16).

14. Procédé selon l'une des revendications 1 à 13, **caractérisé en ce que** comme disposition d'augmentation de température, on prend sur le moteur une disposition d'augmentation de la température des gaz d'échappement et/ou de la température du catalyseur et/ou de relèvement de la teneur en substances nocives des composants oxydables des gaz d'échappement.

15. Procédé selon la revendication 11, **caractérisé en ce que** comme première disposition d'augmentation de température, on étrangle le fonctionnement à vide en maintenant un mode laminaire, la pression dans le tube d'admission en fonctionnement à vide étant de préférence abaissée à une valeur de 600 à 700 mbars.

16. Procédé selon l'une des revendications 1 à 10 et 12 à 15, **caractérisé en ce que** la régulation de la fonction "chauffage du catalyseur" lors de la phase de démarrage du moteur est commandée par l'intermédiaire d'un débit minimum prédéterminé d'énergie extrait de l'installation de traitement des gaz d'échappement, le débit minimum d'énergie étant déterminé comme étant le produit du débit massique des gaz d'échappement, de leur capacité calorifique spécifique et de la température des gaz d'échappement en amont du premier élément de catalyseur (14) diminuée de la température ambiante, les dispositions d'augmentation de la température étant lancées lorsque ce seuil est dépassé.

17. Dispositif de conduite optimale d'une installation de traitement des gaz d'échappement raccordée en aval d'un moteur à combustion interne (10) et comprenant un système de catalyse avec un premier élément de catalyseur (14) et un deuxième élément de catalyseur (16) et des moyens qui font intervenir une commande électronique du moteur dotée d'une unité de commande (24, 26) intégrée et par lesquels les étapes de traitement suivantes peuvent être exécutées :
(a) détermination de l'extraction d'énergie hors du premier élément de catalyseur (14) en déterminant et en cumulant le débit calorifique,
(b) si une première valeur de seuil prédéterminée de l'extraction d'énergie hors du premier élément de catalyseur (14) n'est pas atteinte et si, de préférence en même temps, le seuil minimum de température du deuxième élément de catalyseur (16) n'est pas atteint, l'exécution d'au moins une disposition d'augmentation de la température des gaz d'échappement et/ou de la température du catalyseur est lancée,
(c) éventuellement, si une deuxième valeur de seuil prédéterminée de l'extraction d'énergie hors du premier élément de catalyseur (14) est dépassée et si en même temps le seuil minimum de température du deuxième élément de catalyseur (16) n'est pas atteint, l'exécution d'au moins une disposition d'augmentation de la température des gaz d'échappement et/ou de la température du catalyseur est lancée.

18. Dispositif selon la revendication 17, comprenant d'autres moyens qui permettent d'exécuter l'étape de traitement suivante :
(d) détermination du débit minimum d'énergie lors de la phase de démarrage du moteur en amont de l'installation de traitement des gaz d'échappement, et si une valeur de seuil prédéterminée de ce débit minimum d'énergie est dépassée, l'exécution d'au moins une disposition d'augmentation de la température des gaz d'échappement et/ou de la température du catalyseur est lancée.

19. Dispositif selon les revendications 17 ou 18, **caractérisé en ce que** les moyens comprennent une unité de commande (26) dans laquelle un algorithme de commande des étapes du procédé est conservé sous forme numérique.

20. Dispositif selon la revendication 19, **caractérisé en ce que** l'unité de commande (26) et/ou l'algorithme sont intégrés dans un appareil (24) de commande du moteur.
